(19) **Europäisches Patentamt / European Patent Office / Office européen des brevets**

(11) **EP 4 707 101 A1**

(12) **EUROPEAN PATENT APPLICATION**
published in accordance with Art. 153(4) EPC

(43) Date of publication:
**11.03.2026 Bulletin 2026/11**

(21) Application number: **24822257.2**

(22) Date of filing: **20.02.2024**

(51) International Patent Classification (IPC):
**B60W 30/09** (2012.01) **B62D 6/00** (2006.01)
**B62D 119/00** (2006.01)

(52) Cooperative Patent Classification (CPC):
**B60W 30/09; B62D 6/00**

(86) International application number:
**PCT/CN2024/077756**

(87) International publication number:
**WO 2024/255298 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.06.2023 CN 202310713675**

(71) Applicant: **Shenzhen Yinwang Intelligent
Technologies Co., Ltd.
Shenzhen, Guangdong 518110 (CN)**

(72) Inventors:
• **CHEN, Dongdong
Shenzhen, Guangdong 518129 (CN)**

• **WANG, Xinyu
Shenzhen, Guangdong 518129 (CN)**
• **ZHU, Baohang
Shenzhen, Guangdong 518129 (CN)**
• **QI, Renjie
Shenzhen, Guangdong 518129 (CN)**
• **CHEN, Guangda
Shenzhen, Guangdong 518129 (CN)**
• **LV, Guogang
Shenzhen, Guangdong 518129 (CN)**
• **ZHANG, Renxie
Shenzhen, Guangdong 518129 (CN)**

(74) Representative: **Maiwald GmbH
Elisenhof
Elisenstraße 3
80335 München (DE)**

(54) **CONTROL METHOD AND APPARATUS, AND INTELLIGENT DRIVING DEVICE**

(57) A control method and apparatus, and an intelligent driving device are provided. The method includes: determining a second torque based on at least a first torque of a steering wheel when there is a collision risk between an intelligent driving device and an obstacle, where the first torque is a torque applied by a user of the intelligent driving device to the steering wheel, a direction of the second torque is opposite to a direction of the first torque, and a value of the second torque minus a value of the first torque is greater than or equal to a first preset threshold; and controlling the steering wheel based on the first torque and the second torque. Technical solutions of this application may be applied to an intelligent driving device, for example, an electric vehicle or a new energy vehicle. When a collision risk is detected, a torque of a steering wheel may be controlled based on an action intent of a driver. This can make behavior of the intelligent driving device more human-like in an obstacle avoidance process, and can avoid a large lateral acceleration caused by an excessive torque applied when an obstacle avoidance function is triggered, to improve driving experience of a driver and riding experience of a passenger.

**700**

S701: Determine a second torque based on at least a first torque of a steering wheel when there is a collision risk between an intelligent driving device and a first obstacle, where the first torque is a torque applied by a user of the intelligent driving device to the steering wheel, a direction of the second torque is opposite to a direction of the first torque, and a value of the second torque minus a value of the first torque is greater than or equal to a first preset threshold

S702: Control the steering wheel based on the first torque and the second torque

FIG. 7

**Description**

This application claims priority to Chinese Patent Application No. 202310713675.X, filed with the China National Intellectual Property Administration on June 15, 2023 and entitled "CONTROL METHOD AND APPARATUS, AND INTELLIGENT DRIVING DEVICE", which is incorporated herein by reference in its entirety.

**TECHNICAL FIELD**

This application relates to the field of intelligent driving, and more specifically, to a control method and apparatus, and an intelligent driving device.

**BACKGROUND**

As the automobile industry rapidly develops, many assisted driving technologies and autonomous driving technologies emerge, so that driving pressure can be reduced, and safety and traffic efficiency can be improved. Assisted driving functions include an active safety function. The function can take active determining and preventive safety measures before a driver performs a subjective reaction action in an emergency, to greatly reduce road traffic accidents and related casualties.

However, in a current technical background, an occasion for triggering the active safety function is very close to a collision moment. As a result, a deceleration or lateral acceleration value of a vehicle involved when the function is triggered is large. This affects driving experience of a driver and riding experience of a passenger, and even causes a function failure, threatening driving safety.

**SUMMARY**

This application provides a control method and apparatus, and an intelligent driving device. When a collision risk is detected, a torque of a steering wheel may be controlled based on an action intent of a driver. This can make behavior of the intelligent driving device more human-like in an obstacle avoidance process, and also can avoid a large lateral acceleration caused by an excessive torque applied when an obstacle avoidance function is triggered, to improve driving experience of a driver and riding experience of a passenger.

According to a first aspect, a control method is provided. The method may be performed by an intelligent driving device, or may be performed by a computing platform of an intelligent driving device, or may be performed by a chip or a circuit used for an intelligent driving device. This is not limited in this application.

The method includes: determining a second torque based on at least a first torque of a steering wheel when there is a collision risk between an intelligent driving device and a first obstacle, where the first torque is a torque applied by a user of the intelligent driving device to the steering wheel, a direction of the second torque is opposite to a direction of the first torque, and a value of the second torque minus a value of the first torque is greater than or equal to a first preset threshold; and controlling the steering wheel based on the first torque and the second torque.

It should be noted that the value of the first torque is a torque value of the first torque, and the value of the second torque is a torque value of the second torque.

In some possible implementations, the first preset threshold may be a negative number. In other words, the value of the second torque may be less than the value of the first torque. For example, the first preset threshold may be -0.5 Newton meters (N·m), or the first preset threshold may be another value.

For example, under action of the first torque, the intelligent driving device travels from a current driving direction to a first side of the intelligent driving device, and the first obstacle is located on the first side of the intelligent driving device. The first side may be a left side or a right side of the intelligent driving device.

In the foregoing technical solution, when the collision risk is detected, an opposite force may be applied to the steering wheel based on a torque applied by a driver to the steering wheel, to remind the driver of the collision risk. In addition, the steering wheel is controlled based on an action intent of the driver. This can make behavior of the intelligent driving device more human-like in an obstacle avoidance process, and also can avoid a large lateral acceleration caused by an excessive torque applied when an obstacle avoidance function is triggered, to improve driving experience of a driver and riding experience of a passenger.

It should be noted that, in this application, a lateral direction is a direction perpendicular to a longitudinal symmetry plane of the intelligent driving device, and a longitudinal direction is a direction parallel to the longitudinal symmetry plane of the intelligent driving device.

With reference to the first aspect, in some implementations of the first aspect, determining the second torque based on at least the first torque of the steering wheel includes: determining the value of the second torque based on the value of the first torque and a first collision risk between the intelligent driving device and the first obstacle, where when the first collision risk is less than or equal to a first threshold, the value of the second torque minus the value of the first torque is greater than or equal to the first preset threshold and is less than a second preset threshold; or when the first collision risk is greater than the first threshold, the value of the second torque minus the value of the first torque is greater than or equal to the second preset threshold.

For example, the second preset threshold may be zero, or may be a positive number.

For example, the value of the second torque may be determined based on the first collision risk. A higher first collision risk indicates a larger difference between the value of the second torque and the value of the first torque. Further, under action of the second torque, a lateral acceleration of the intelligent driving device in a direction opposite to the first side is greater.

In some possible implementations, the first collision risk may be measured based on a time to collision (time to collision, TTC), and the first collision risk is quantified into at least two levels based on the TTC.

In some possible implementations, the first collision risk may be measured based on a time to reaction (time to reaction, TTR) and a distance between the first obstacle and the intelligent driving device, and the first collision risk is quantified into at least two levels.

In some possible implementations, the first collision risk may be calculated based on locations and velocitys of obstacles other than the first obstacle, and the first collision risk is quantified into at least two levels based on the locations and the velocitys of the obstacles.

For example, the at least two levels may include a level 1 and a level 2. A collision risk corresponding to the level 1 is less than a collision risk corresponding to the level 2. The first threshold may be the level 1.

In the foregoing technical solution, before a collision occurs, a torque of the steering wheel is intervened in phases based on the collision risk. When the collision risk is low, a counter torque is generated based on a torque applied by a driver to the steering wheel. The driver can be notified of the collision risk in time through the counter torque, to help avoid a more dangerous driving scenario in which the intelligent driving device enters. When the collision risk is high, a correction torque may be generated based on the torque applied by the driver to the steering wheel. A collision may be avoided through the correction torque, to help improve driving safety.

With reference to the first aspect, in some implementations of the first aspect, the method further includes: when a second collision risk between the intelligent driving device and the first obstacle is less than or equal to a second threshold, determining a first longitudinal acceleration based on driving comfort, and controlling, based on the first longitudinal acceleration, the intelligent driving device to decelerate; or when the second collision risk is greater than the second threshold, determining a second longitudinal acceleration based on at least a distance between the intelligent driving device and the first obstacle, and controlling, based on the second longitudinal acceleration, the intelligent driving device to decelerate, where an absolute value of the second longitudinal acceleration is greater than an absolute value of the first longitudinal acceleration.

It may be understood that both the first longitudinal acceleration and the second longitudinal acceleration are negative values.

In some possible implementations, the second collision risk is measured based on a TTC, and the second collision risk is quantified into at least two levels based on the TTC; or the second collision risk is measured based on a TTR and a distance between the first obstacle and the intelligent driving device, and the second collision risk is quantified into at least two levels.

In some possible implementations, a method for determining the second collision risk is the same as a method for determining the first collision risk.

For example, determining the second longitudinal acceleration based on at least the distance between the intelligent driving device and the first obstacle includes: determining a TTC based on the distance between the intelligent driving device and the first obstacle and a relative velocity between the intelligent driving device and the first obstacle, and determining a second longitudinal acceleration based on the TTC and a current velocity of the intelligent driving device.

In the foregoing technical solution, the collision risk of the intelligent driving device is predicted in advance. When the collision risk is low, the intelligent driving device may be controlled to slowly decelerate at an acceleration that does not affect driving experience and riding experience, so as to prevent the intelligent driving device from entering a more dangerous scenario (for example, a scenario with a higher collision risk). This improves the experience of the driver and the passenger while ensuring driving safety. When the collision risk is high, the intelligent driving device may still be decelerated at a high acceleration, to improve driving safety. In addition, when the collision risk is detected, lateral and longitudinal joint control is performed. In a complex driving scenario, this helps reduce a probability of a collision and improve driving safety.

With reference to the first aspect, in some implementations of the first aspect, the method further includes: when a third collision risk between the intelligent driving device and the first obstacle is greater than or equal to a third threshold, determining a first motion trajectory based on control information entered by the user of the intelligent driving device and an obstacle boundary, where the control information includes at least one of the following: opening information of an accelerator pedal of the intelligent driving device, opening information of a brake pedal of the intelligent driving device, and the first torque, and the obstacle boundary is determined based on a plurality of obstacles including the first obstacle; and determining the second torque based on at least the first torque of the steering wheel includes: determining the second torque based on the first motion trajectory and the first torque, so that the intelligent driving device travels along the first motion trajectory when the steering wheel is controlled based on the second torque.

In some possible implementations, a method for determining the third collision risk is the same as the method for determining the first and second collision risks. For example, if the third collision risk is determined based on the TTC, the third threshold is less than the first and second thresholds.

In some possible implementations, the first collision risk and the second collision risk are determined based on the first motion trajectory.

In the foregoing technical solution, trajectory planning is performed based on the control information entered by the user. This helps generate an obstacle avoidance trajectory (for example, the first motion trajectory) that conforms to driving behavior of the driver, and can improve driving experience of the driver. Further, lateral control is performed based on the obstacle avoidance trajectory that conforms to the driving behavior of the driver. This helps improve human-likeness of lateral control of the intelligent driving device.

With reference to the first aspect, in some implementations of the first aspect, the method further includes: determining a plurality of motion trajectories based on a driver reaction time and a control parameter reachable set, where the control parameter reachable set is a set of motion parameters that can be implemented by the intelligent driving device under control of the user; and determining the third collision risk based on the plurality of motion trajectories and a location and a velocity of the first obstacle.

For example, determining the third collision risk based on the plurality of motion trajectories and the location and the velocity of the first obstacle includes: determining a collision risk of each of the plurality of motion trajectories based on the location and the velocity of the first obstacle; and performing summation after assigning different weights to the collision risks of all the motion trajectories, to obtain the third collision risk.

For example, the weight may be determined based on a lateral offset of the motion trajectory, and a larger lateral offset indicates a smaller weight.

In the foregoing technical solution, the plurality of motion trajectories are determined based on the driver reaction time and the control parameter reachable set, so that a potential collision risk can be discovered in advance, and then lateral control and/or longitudinal control are/is performed on the intelligent driving device based on the potential collision risk. This can prevent the intelligent driving device from entering a scenario with a higher collision risk, and helps improve driving experience of a driver and riding experience of a passenger. Predicting the collision risk based on the plurality of motion trajectories helps reduce a probability of incorrectly determining the collision risk, and can improve a detection rate of a potential collision risk in a complex scenario. Therefore, driving safety is improved.

With reference to the first aspect, in some implementations of the first aspect, the first obstacle includes at least one of the following: a motor vehicle, a non-motor vehicle, a general obstacle, and a pedestrian.

In the foregoing technical solution, when collision risk detection is performed, in addition to the motor vehicle, impact of another type of obstacle on the intelligent driving device is further considered. This helps improve driving safety.

With reference to the first aspect, in some implementations of the first aspect, determining the second torque based on at least the first torque of the steering wheel includes: determining the value of the second torque based on the TTC between the intelligent driving device and the first obstacle and the value of the first torque, where when the TTC is greater than or equal to first duration, the value of the second torque minus the value of the first torque is greater than or equal to the first preset threshold and less than a second preset threshold; or when the TTC is less than first duration, the value of the second torque minus the value of the first torque is greater than or equal to the second preset threshold.

For example, the first duration may be 1.5 seconds, or the first duration may be another value.

With reference to the first aspect, in some implementations of the first aspect, the method further includes: when a remaining distance between the intelligent driving device and the first obstacle is greater than or equal to a preset distance, determining a first longitudinal acceleration based on driving comfort, and controlling, based on the first longitudinal acceleration, the intelligent driving device to decelerate; or when a remaining distance is less than a preset distance, determining a second longitudinal acceleration based on at least the distance between the intelligent driving device and the first obstacle, and controlling, based on the second longitudinal acceleration, the intelligent driving device to decelerate, where an absolute value of the second longitudinal acceleration is greater than an absolute value of the first longitudinal acceleration.

For example, the remaining distance may be a result obtained by subtracting a product of a velocity of the intelligent driving device and a driver reaction time from an actual longitudinal distance between the intelligent driving device and the first obstacle.

For example, the preset distance may be 2 meters, or the preset distance may be another value.

According to a second aspect, a control method is provided. The method includes: when a second collision risk between the intelligent driving device and the first obstacle is less than or equal to a second threshold, determining a first longitudinal acceleration based on driving comfort, and controlling, based on the first longitudinal acceleration, the intelligent driving device to decelerate; or when the second collision risk is greater than the second threshold, determining a second longitudinal acceleration based on at least a distance between the intelligent driving device and the first obstacle, and controlling, based on the second longitudinal acceleration, the intelligent driving device to decelerate, where an absolute value of the second longitudinal acceleration is greater than an absolute value of the first longitudinal acceleration.

With reference to the second aspect, in some implementations of the second aspect, the method further includes: determining a value of a second torque based on a value of a first torque of a steering wheel and a first collision risk between the intelligent driving device and the first obstacle, where the first torque is a torque applied by a user of the intelligent driving device to the steering wheel, a direction of the second torque is opposite to a direction of the first torque, and when the first collision risk is less than or equal to a first threshold, the value of the second torque minus the value of the first torque is greater than or equal to a first preset threshold and less than a second preset threshold, or when the first collision risk is greater than a first threshold, the value of the second torque minus the value of the first torque is greater than or equal to a second preset threshold; and controlling the steering wheel based on the first torque and the second torque.

With reference to the second aspect, in some implementations of the second aspect, the method further includes: when a third collision risk between the intelligent driving device and the first obstacle is greater than or equal to a third threshold, determining a first motion trajectory based on control information entered by the user of the intelligent driving device and an obstacle boundary, where the control information includes at least one of the following: opening information of an accelerator pedal of the intelligent driving device, opening information of a brake pedal of the intelligent driving device, and the first torque, and the obstacle boundary is determined based on a plurality of obstacles including the first obstacle; and determining the second torque based on at least the first torque of the steering wheel includes: determining the second torque based on the first motion trajectory and the first torque, so that the intelligent driving device travels along the first motion trajectory when the steering wheel is controlled based on the second torque.

With reference to the second aspect, in some implementations of the second aspect, the method further includes: determining a plurality of motion trajectories based on a driver reaction time and a control parameter reachable set, where the control parameter reachable set is a set of motion parameters that can be implemented by the intelligent driving device under control of the user; and determining the third collision risk based on the plurality of motion trajectories and a location and a velocity of the first obstacle.

With reference to the second aspect, in some implementations of the second aspect, the first obstacle includes at least one of the following: a motor vehicle, a non-motor vehicle, a general obstacle, and a pedestrian.

According to a third aspect, a control apparatus is provided. The apparatus includes: a first determining unit, configured to determine a second torque based on at least a first torque of a steering wheel when there is a collision risk between an intelligent driving device and a first obstacle, where the first torque is a torque applied by a user of the intelligent driving device to the steering wheel, a direction of the second torque is opposite to a direction of the first torque, and a value of the second torque minus a value of the first torque is greater than or equal to a first preset threshold; and a processing unit, configured to control the steering wheel based on the first torque and the second torque.

With reference to the third aspect, in some implementations of the third aspect, the first determining unit is configured to: determine the value of the second torque based on the value of the first torque and a first collision risk between the intelligent driving device and the first obstacle, where when the first collision risk is less than or equal to a first threshold, the value of the second torque minus the value of the first torque is greater than or equal to the first preset threshold and is less than a second preset threshold; or when the first collision risk is greater than the first threshold, the value of the second torque minus the value of the first torque is greater than or equal to the second preset threshold.

With reference to the third aspect, in some implementations of the third aspect, the first determining unit is further configured to: when a second collision risk between the intelligent driving device and the first obstacle is less than or equal to a second threshold, determine a first longitudinal acceleration based on driving comfort, and control, based on the first longitudinal acceleration, the intelligent driving device to decelerate; or when the second collision risk is greater than the second threshold, determine a second longitudinal acceleration based on at least a distance between the intelligent driving device and the first obstacle, and control, based on the second longitudinal acceleration, the intelligent driving device to decelerate, where an absolute value of the second longitudinal acceleration is greater than an absolute value of the first longitudinal acceleration.

With reference to the third aspect, in some implementations of the third aspect, the apparatus further includes a second determining unit. The second determining unit is configured to: when a third collision risk between the intelligent driving device and the first obstacle is greater than or equal to a third threshold, determine a first motion trajectory based on control information entered by the user of the intelligent driving device and an obstacle boundary, where the control information includes at least one of the following: opening information of an accelerator pedal of the intelligent driving device, opening information of a brake pedal of the intelligent driving device, and the first torque, and the obstacle boundary is determined based on a plurality of obstacles including the first obstacle; and the first determining unit is configured to: determine the second torque based on the first motion trajectory and the first torque, so that the intelligent driving device travels along the first motion trajectory when the steering wheel is controlled based on the second torque.

With reference to the third aspect, in some implementations of the third aspect, the apparatus further includes a third determining unit. The third determining unit is configured to: determine a plurality of motion trajectories based on a driver reaction time and a control parameter reachable set, where the control parameter reachable set is a set of motion parameters that can be implemented by the intelligent driving device under control of the user; and determine the third collision risk based on the plurality of motion trajectories and a location and a velocity of the first obstacle.

With reference to the third aspect, in some implementations of the third aspect, the first obstacle includes at least one of the following: a motor vehicle, a non-motor vehicle, a general obstacle, and a pedestrian.

According to a fourth aspect, a control apparatus is provided. The apparatus includes a determining unit and a processing unit, and is configured to perform the method according to any one of the possible implementations of the second aspect.

According to a fifth aspect, a control apparatus is provided. The apparatus includes: a memory, configured to store a computer program; and a processor, configured to execute the computer program stored in the memory, to enable the apparatus to perform the method according to any one of the possible implementations of the first aspect or the second aspect.

According to a sixth aspect, an intelligent driving device is provided. The intelligent driving device includes the apparatus according to any one of the possible implementations of the third aspect to the fifth aspect.

With reference to the sixth aspect, in some implementations of the sixth aspect, the intelligent driving device is a vehicle.

According to a seventh aspect, a computer program product is provided. The computer program product includes computer program code, and when the computer program code is run on a computer, the computer is enabled to perform the method according to any one of the possible implementations of the first aspect or the second aspect.

It should be noted that the computer program code may be completely or partially stored in a first storage medium. The first storage medium may be encapsulated with a processor, or encapsulated separately from a processor.

According to an eighth aspect, a computer-readable medium is provided. The computer-readable medium stores instructions. When the instructions are executed by a processor, the processor is enabled to implement the method according to any one of the possible implementations of the first aspect or the second aspect.

According to a ninth aspect, a chip is provided. The chip includes a circuit, and the circuit is configured to perform the method according to any one of the possible implementations of the first aspect or the second aspect.

**BRIEF DESCRIPTION OF DRAWINGS**

FIG. 1 is a diagram of a driving scenario;
FIG. 2 is a functional block diagram of an intelligent driving device according to an embodiment of this application;
FIG. 3 is a diagram of a system architecture required for implementing a control method according to an embodiment of this application;
FIG. 4 is a schematic flowchart of a control method according to an embodiment of this application;
FIG. 5 is a diagram of a driving scenario according to an embodiment of this application;
FIG. 6 is a diagram of another driving scenario according to an embodiment of this application;
FIG. 7 is another schematic flowchart of a control method according to an embodiment of this application;
FIG. 8 is a block diagram of a control apparatus according to an embodiment of this application; and
FIG. 9 is another block diagram of a control apparatus according to an embodiment of this application.

**DESCRIPTION OF EMBODIMENTS**

The following describes technical solutions of this application with reference to accompanying drawings.

As described above, an occasion for triggering an active safety function is very close to a collision moment. As a result, a designed deceleration or lateral acceleration value of a vehicle is large when the function is triggered. This affects driving experience of a driver and riding experience of a passenger, and even causes a function failure, thereby threatening driving safety.

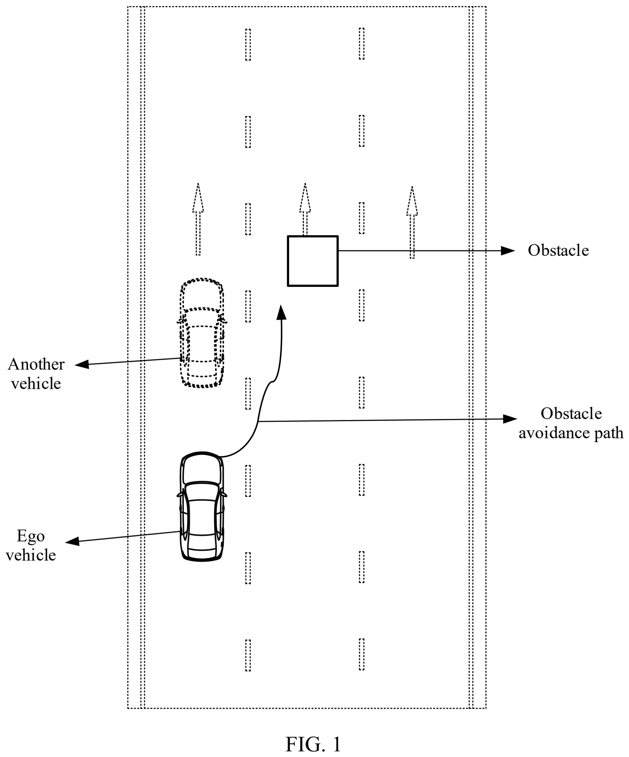

In addition, it is difficult to make proper decisions for the active safety function when a road condition is complex. For example, for a scenario shown in FIG. 1, emergency braking is usually triggered through an autonomous emergency braking (autonomous emergency braking, AEB) function for a nearest neighboring front vehicle (for example, another vehicle in the figure). A triggering moment is usually between 0.8 seconds and 1.6 seconds before a collision. It can be learned that the AEB is triggered at a moment that is close to a collision moment, and a collision cannot be avoided in some scenarios. For example, when the vehicle in front suddenly decelerates, the collision may not be avoided through the AEB function. In the foregoing case, an evasive steering assist (evasive steering assist, ESA) function may also be used to assist a driver in performing emergency lateral collision avoidance. However, in the scenario shown in FIG. 1, when a vehicle changes a lane shown in the figure, a collision with an obstacle on the right side may not be avoided. In other words, the AEB function and the ESA function can respectively perform longitudinal control and lateral control on the vehicle, but a single lateral or longitudinal control cannot avoid a collision in the complex scenario shown in FIG. 1.

In view of this, embodiments of this application provide a control method, an apparatus, and an intelligent driving device. When a collision risk is detected, path planning can be performed in advance based on a driving intent of a driver. The vehicle is controlled to avoid an obstacle through joint planning of lateral and longitudinal control. This improves driving safety of the vehicle. In addition, in the control method provided in embodiments of this application, when lateral control is performed, a torque of a steering wheel can be controlled in phases. The torque of the steering wheel can be used to remind the driver in time when the collision risk is detected in an early stage, and the torque of the steering wheel can also be prevented from intervening in an opposite direction in which a collision may occur too early, so as to avoid affecting driving and riding experience of the driver.

The following describes technical solutions in embodiments of this application with reference to accompanying drawings.

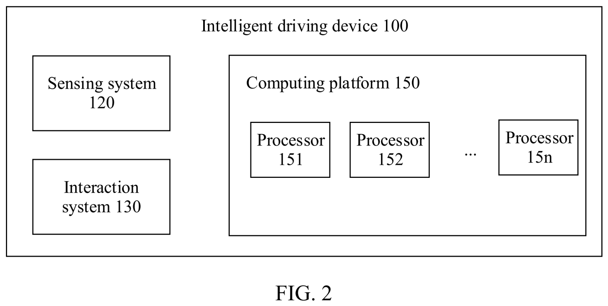

FIG. 2 is a functional block diagram of an intelligent driving device 100 according to an embodiment of this application. The intelligent driving device 100 may include a sensing system 120, an interaction system 130, and a computing platform 150. The sensing system 120 may include one or more sensors that sense information about an ambient environment of the intelligent driving device 100. For example, the sensing system 120 may include a positioning system. The positioning system may be a global positioning system (global positioning system, GPS), a BeiDou system or another positioning system, or an inertial measurement unit (inertial measurement unit, IMU). For another example, the sensing system 120 may further include one or more of a lidar, a millimeter-wave radar, an ultrasonic radar, and a photographing apparatus.

The interaction system 130 may include a hand torque interaction module. The hand torque interaction module may include a torque detection apparatus, configured to detect a torque applied by a hand of a driver to a steering wheel. The interaction system 130 may further include a human machine interface (human machine interface, HMI), configured to provide a user with a trigger moment for adjusting a collision avoidance function of an assisted driving system, to adapt to different driver styles. For example, the interaction system 130 may further include a sound device, for example, a speaker or a sound box, configured to broadcast information to the user.

Some or all of functions of the intelligent driving device 100 may be controlled by the computing platform 150. The computing platform 150 may include one or more processors, such as processors 151 to 15n (n is a positive integer). The processor is a circuit having an instruction processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital instruction processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement configuration of the hardware circuit may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit DPU). In addition, the computing platform 150 may further include a memory. The memory is configured to store instructions. Some or all processors in the processor 151 to the processor 15n may invoke the instructions in the memory and execute the instructions to implement a corresponding function.

The intelligent driving device 100 may include an advanced driving assistance system (advanced driving assistant system, ADAS). The ADAS obtains information from around the intelligent driving device by using a plurality of sensors (including but not limited to: a lidar, a millimeter-wave radar, a camera apparatus, an ultrasonic sensor, a global positioning system, and an inertial measurement unit) on the intelligent driving device, and analyzes and processes the obtained information, to implement functions such as obstacle sensing, target recognition, intelligent driving device positioning, path planning, and user monitoring/reminder. In this way, driving safety, automation, and comfort of the intelligent driving device are improved.

In terms of logical functions, the ADAS system generally includes three main functional modules: a sensing module, a decision-making module, and an execution module. The sensing module senses an ambient environment of a vehicle body by using a sensor, and inputs corresponding real-time data to a processing center at a decision-making layer. The sensing module mainly includes a vehicle-mounted camera, an ultrasonic radar, a millimeter-wave radar, a lidar, or the like. The decision-making module uses a computing apparatus and an algorithm to make a corresponding decision based on information obtained by the sensing module. After receiving a decision instruction from the decision-making module, the execution module takes a corresponding action, for example, driving, lane change, steering, braking, or warning.

In this embodiment of this application, the computing platform 150 may generate a plurality of predicted trajectories based on a driver intent, and further evaluate a current collision risk based on the plurality of predicted trajectories and information, for example, a location and a velocity of an obstacle around the intelligent driving device that is collected by the sensing system 120. When the collision risk is greater than or equal to a preset threshold, the collision avoidance function is activated, and lateral control and longitudinal control are performed on the intelligent driving device based on the plurality of predicted trajectories and the related information of the obstacle. The lateral control may be performed based on a hand torque that is applied by the user to a steering wheel and that is collected by the interaction system 130.

The intelligent driving device in this application may include a vehicle on a road, a vehicle on water, an air vehicle, an industrial device, an agricultural device, an entertainment device, or the like. For example, the intelligent driving device may be a vehicle. The vehicle is a vehicle in a broad sense, and may be a transportation means (for example, a commercial vehicle, a passenger vehicle, a motorcycle, an airborne vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), an entertainment device, or a toy vehicle. A type of the vehicle is not specifically limited in embodiments of this application.

FIG. 2 is a diagram of a system architecture required for implementing a control method according to an embodiment of this application. As shown in FIG. 2, the system includes a sensing module 210, an activation decision-making module 220, a lateral and longitudinal planning module 230, and an interaction module 240. The sensing module 210 may include one or more sensors in the sensing system 120 shown in FIG. 1. The activation decision-making module 220 and the lateral and longitudinal planning module 230 each may include one or more processors in the computing platform 150 shown in FIG. 1. The interaction module 240 may include one or more modules in the interaction system 130 shown in FIG. 1.

The sensing module 210 is configured to collect a real-time operating parameter (for example, a driving velocity, power information, or a steering wheel angle) of the intelligent driving device, and information, for example, a location and a velocity of an obstacle around the intelligent driving device. The sensing module 210 sends related information sensed by the sensing module 210 to the activation decision-making module 220 and the lateral and longitudinal planning module 230.

The activation decision-making module 220 generates a plurality of predicted trajectories based on a real-time operating parameter of the driving device and a driver reaction time. Further, the activation decision-making module 220 evaluates a collision risk of the intelligent driving device based on the plurality of predicted trajectories and the information, for example, the location and the velocity of the obstacle around the intelligent driving device. When the collision risk is greater than or equal to a preset threshold, the activation decision-making module 220 activates the lateral and longitudinal planning module 230 to perform lateral and longitudinal control on the intelligent driving device, to avoid a collision. The lateral and longitudinal planning module 230 includes a path planning module 231, a velocity planning module 232, and a trajectory selection module 233. The path planning module 231 generates a plurality of lateral paths based on state space sampling. The velocity planning module 232 plans a longitudinal velocity of the lateral path based on information, for example, a velocity and an acceleration of the intelligent driving device, to obtain a plurality of planned trajectories. The trajectory selection module 233 determines one planned trajectory from the plurality of trajectories output by the velocity planning module 232, and inputs the planned trajectory to the interaction module 240. For example, the planned trajectory determined by the trajectory selection module 233 may be a trajectory that best meets an intent of the driver.

The interaction module 240 includes a longitudinal control module 241, a torque calculation module 242, and a torque interaction module 243. The longitudinal control module 241 determines a planned velocity of the intelligent driving device based on the planned trajectory. The torque calculation module 242 determines a preliminary planned torque of a steering wheel based on the planned trajectory, and inputs the preliminary planned torque to the torque interaction module 243. Further, the torque interaction module 243 determines a final planned torque based on a force applied by a user to the steering wheel and the collision risk. When executing the planned velocity and the final planned torque, the intelligent driving device may travel based on the planned trajectory.

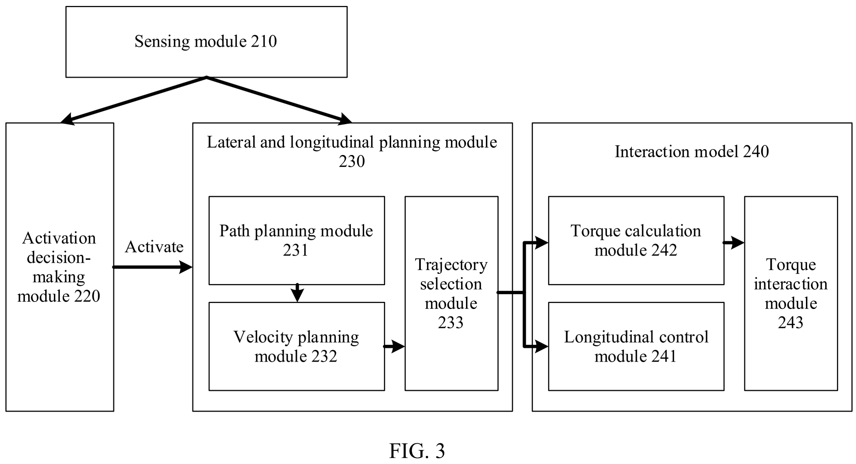

It should be understood that the foregoing modules are merely examples. In actual application, the foregoing modules may be added or deleted based on an actual requirement. For example, in a system architecture shown in FIG. 3, the path planning module 231 and the velocity planning module 232 may be combined into one module.

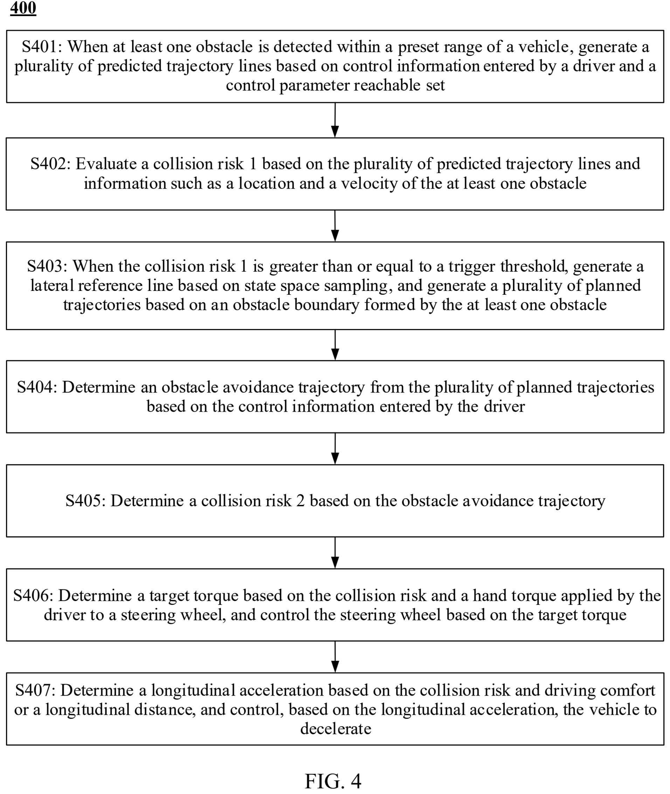

FIG. 4 is a schematic flowchart of a control method according to an embodiment of this application. The method may be applied to the intelligent driving device shown in FIG. 2, or the method may be performed by the system shown in FIG. 3. For example, the following uses an example in which the intelligent driving device is a vehicle and the method is performed by a computing platform of the vehicle for description. The method 400 may include the following steps.

S401: When at least one obstacle is detected within a preset range of the vehicle, generate a plurality of predicted trajectories based on control information entered by a driver and a control parameter reachable set.

The control parameter reachable set is a set of motion parameters that can be implemented by the vehicle under control of a user. For example, the control parameter reachable set is a longitudinal acceleration, a lateral offset, and the like that can be reached by the vehicle under control of the user.

For example, the preset range may be a range that is 100 meters away from an outer contour of the vehicle, or may be a range that may affect driving safety of the vehicle, or may be another range.

For example, the at least one obstacle may be static, or may be moving. The at least one obstacle may include but is not limited to a motor vehicle, a non-motor vehicle, a general obstacle, or a pedestrian. The general obstacle may include a roadblock, for example, a cone and a triangular warning sign, may include a temporary signboard on a road, or may include an obstacle, for example, a guardrail, a wall, or a stone pier.

It should be noted that the at least one obstacle may include an obstacle in front of the vehicle, or may include obstacles located behind and on a side of the vehicle within the preset range.

For example, the control information may include but is not limited to: opening information of an accelerator pedal of the vehicle, opening information of a brake pedal of the vehicle, and a torque of a steering wheel. The opening information includes an opening size and an opening change rate.

In some possible implementations, to generate a plurality of predicted trajectories, lateral path derivation and longitudinal trajectory derivation may be separately performed. Further, a plurality of predicted trajectories with time information are generated based on a lateral path and a longitudinal trajectory.

For example, the lateral path of the vehicle may be derived according to the following formula:

$$l(s_e) = \begin{cases} LateralOffset_{cur} & s_e \le s_{e\,TTR} \\ as_e^3 + bs_e^2 + cs_e + d & s_{e\,TTR} < s_e \le s_{e\,reachable} \\ lateralOffset_{re} & s_e > s_{e\,reachable} \end{cases} \tag{1}$$

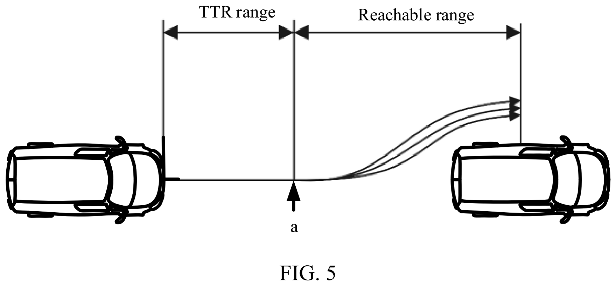

Herein, $s_e$ is a longitudinal location of the vehicle, and $l(s_e)$ is a lateral offset corresponding to the longitudinal location $s_c$ of the vehicle. $s_{e\,TTR}$ is a location that is at a first distance from a longitudinal start location of the vehicle, the first distance is calculated based on a driver reaction time and a current velocity of the vehicle, and the longitudinal start location of the vehicle may be understood as a location of the vehicle in a direction parallel to a longitudinal symmetry plane of the vehicle at a current moment. For example, $s_{e\,TTR}$ may be a length of a TTR range shown in FIG. 5, that is, a distance from a vehicle head to a location a. $s_{e\,TTR}$ to $s_{e\,reachable}$ may be a reachable range shown in FIG. 5. $LateralOffset_{cur}$ is a lateral offset corresponding to the vehicle at the current moment. $lateralOffset_{re}$ is a lateral offset corresponding to an end of connection of a cubic curve, and the value may be determined based on a torque applied by the driver to the steering wheel and/or a lateral acceleration that may be reached by the vehicle under control of the user. $s_{e\,reachable}$ is a longitudinal location corresponding to the end of connection of the cubic curve, and the value may be preset in a system. During specific implementation, the value may be dynamically adjusted based on a vehicle model and a driving aggressiveness degree of the driver. For example, when the vehicle model is a large vehicle or the driving aggressiveness degree of the driver is high, the value of $s_{e\,reachable}$ is large. A path is connected from ($s_{e\,TTR}$, $LateralOffset_{cur}$) to ($s_{e\,reachable}$, $lateralOffset_{re}$) by using the cubic curve, and tangent directions of the cubic curve at ($s_{e\,TTR}$, $LateralOffset_{cur}$) and ($s_{e\,reachable}$, $lateralOffset_{re}$) are parallel to a traveling direction of the vehicle. Herein, *a, b, c, d* are coefficients of a cubic polynomial, and specific values of *a, b, c, d* may be determined based on control information entered by the driver. The specific values of *a, b, c, d* are not limited in this application.

For example, the driver reaction time may be preset in a system, or may be set by the user of the vehicle. For example, the driver reaction time may be any value from 0.4 seconds to 1.0 seconds.

Further, the longitudinal trajectory of the vehicle is determined based on the opening information of the accelerator pedal, the opening information of the brake pedal, and a longitudinal acceleration that may be implemented by the vehicle in a current running state in response to control of the driver.

It may be understood that the longitudinal trajectory includes a change of a longitudinal location ($s_e$) of the vehicle with a derivation moment.

It should be noted that the lateral acceleration that may be reached by the vehicle under control of the user may be a lateral acceleration range, and the longitudinal acceleration that may be implemented by the vehicle in the current running state in response to control of the driver may be a longitudinal acceleration range. Therefore, the derived lateral path and the longitudinal trajectory each may have a plurality of groups of data. During specific implementation, the user may adjust a quantity of predicted trajectories by adjusting value steps of the lateral acceleration range and the longitudinal acceleration range.

S402: Evaluate a collision risk 1 based on the plurality of predicted trajectories and information such as a location and a velocity of the at least one obstacle.

For example, the collision risk 1 may be determined according to the following formula (2):

$$S_{co} = \sum_i s_i * cost_i \qquad (2)$$

Herein, $S_{co}$ is the collision risk 1, $cost_i$ is a collision risk of a trajectory i in the plurality of predicted trajectories, and $s_i$ is a weight of the collision risk of the trajectory i. Herein, i is a positive integer, and $s_i$ may be a value between 0 and 1. A specific value of $s_i$ may be determined based on a lateral offset of the predicted trajectory relative to the vehicle. A larger lateral offset indicates a smaller weight.

Herein, $cost_i$ is determined according to the following formula (3):

$$cost_i = \text{w1} * cost_{co_i} + \text{w2} * cost_{in_i} + \text{w3} * cost_{ve_i} \qquad (3)$$

Herein, $cost_{coi}$ indicates whether the vehicle collides with the obstacle when traveling along the trajectory i. When the vehicle collides with the obstacle, $cost_{coi}$ is 1. When the vehicle does not collide with the obstacle, $cost_{coi}$ is 0. $cost_{ini}$ indicates a degree of matching between the trajectory i and a driving intent of the driver, and $cost_{ini}$ may be a value between 0 and 1. A higher degree of matching between the trajectory i and the driving intent of the driver indicates a smaller value of $cost_{ini}$. $cost_{vei}$ indicates comfort of the driver of the vehicle when the vehicle travels along the trajectory i, and may be determined according to the following formula (4). w1, w2, and w3 are respectively weights of $cost_{coi}$, $cost_{ini}$ and $cost_{vei}$, w1, w2, and w3 are values between 0 and 1, and a sum of w1, w2, and w3 is equal to 1.

$$cost_{ve} = \frac{jerk - jerkThresMin}{jerkThresMax - jerkThresMin} \qquad (4)$$

Herein, jerk indicates a change rate of an acceleration of the vehicle, *jerkThresMin* indicates a lower threshold of the change rate of the acceleration of the vehicle, and *jerkThresMax* indicates an upper threshold of the change rate of the acceleration of the vehicle. For example, when jerk is less than *jerkThresMin, cost$_{ve}$* is 0; or when jerk is greater than *jerkThresMax, cost$_{ve}$* is 1.

It may be understood that a maximum value of a cost of each trajectory is 1, and a minimum value of the cost is 0.

S403: When the collision risk 1 is greater than or equal to a trigger threshold, generate a lateral reference line based on state space sampling, and generate a plurality of planned trajectories based on an obstacle boundary formed by the at least one obstacle.

For example, the trigger threshold may be 1, or the trigger threshold may be another value.

For example, the plurality of trajectories may be generated based on the method in S401, and then a trajectory that exceeds the obstacle boundary in the plurality of trajectories is removed based on the obstacle boundary, to obtain the plurality of planned trajectories.

S404: Determine an obstacle avoidance trajectory from the plurality of planned trajectories based on the control information entered by the driver.

For example, a motion trajectory may be generated based on the control information entered by the driver and a current operating parameter of the vehicle. The current operating parameter of the vehicle may include a vehicle velocity, a vehicle attitude angle, and the like.

Further, a degree of matching between the motion trajectory and each of the plurality of planned trajectories is determined, and a planned trajectory with a highest matching degree in the plurality of planned trajectories is determined as the obstacle avoidance trajectory.

S405: Determine a collision risk 2 based on the obstacle avoidance trajectory.

For example, the collision risk 2 may indicate at least one of the following: a collision risk between the vehicle and a side obstacle, and a collision risk between the vehicle and a front obstacle.

In some possible implementations, when the vehicle may collide with the front obstacle when traveling along the obstacle avoidance trajectory, the collision risk between the vehicle and the front obstacle may be determined based on a longitudinal distance between the vehicle and the front obstacle and the current velocity of the vehicle; or the collision risk between the vehicle and the front obstacle may be determined based on a TTC.

In some possible implementations, when the vehicle may collide with the side obstacle when traveling along the obstacle avoidance trajectory, the collision risk between the vehicle and the side obstacle may be determined based on a lateral distance between the vehicle and the side obstacle and a lateral velocity of the vehicle; or the collision risk between the vehicle and the side obstacle may be determined based on the TTC; or the collision risk between the vehicle and the side obstacle may be determined based on a location and a velocity of the side obstacle and the obstacle avoidance trajectory.

In some possible implementations, the collision risk 2 may be determined based on the obstacle avoidance trajectory and locations and velocitys of a plurality of obstacles on the way on which the vehicle travels along the obstacle avoidance trajectory. For example, the collision risk 2 may be determined according to the foregoing formula (3).

For example, collision risks may be classified into levels, for example, at least two levels, so that the vehicle performs lateral control and/or longitudinal control based on different collision risk levels.

The following describes classification of different collision risk levels by using an example in which a collision risk between the vehicle and a front nearest obstacle is determined based on a longitudinal distance between the vehicle and the front nearest obstacle and the current velocity of the vehicle. For example, a remaining distance L is determined based on the longitudinal distance l between the vehicle and the front nearest obstacle and the current velocity v of the vehicle, different remaining distances correspond to different collision risk levels, and a correspondence between the remaining distance and the collision risk level is shown in Table 1. L = 1 - v*T, where T is the driver reaction time.

Table 1

| Collision risk level | Remaining distance L |
| --- | --- |
| Level 3 | $L \leq 1$ meter |
| Level 2 | 1 meter $< L \leq 2$ meters |
| Level 1 | 2 meters $< L \leq 3$ meters |

The following describes classification of different collision risk levels by using an example in which the collision risk between the vehicle and the side obstacle is determined based on the TTC. For example, the TTC is determined based on a lateral component of the current velocity v of the vehicle, the lateral distance between the side obstacle and the vehicle, and the velocity of the side obstacle. Different TTCs correspond to different collision risk levels. A correspondence between the TTC and the collision risk level is shown in Table 2.

Table 2

| Collision risk level | TTC |
| --- | --- |
| Level 3 | $TTC \leq 1$ second |
| Level 2 | 1 second $< TTC \leq 2.5$ seconds |
| Level 1 | $2.5 < TTC \leq 4$ seconds |

S406: Determine a target torque based on the collision risk and a hand torque applied by the driver to the steering wheel, and control the steering wheel based on the target torque.

It may be understood that the hand torque applied by the driver to the steering wheel causes the vehicle to deviate in a first direction, and consequently, the vehicle has a collision risk with at least one obstacle in the first direction. If the vehicle does not have the collision risk with the at least one obstacle in the first direction, S403 to S405 are not triggered. Therefore, to reduce the collision risk between the vehicle and the at least one obstacle, the vehicle needs to be controlled to have a trend of traveling in a direction opposite to the first direction. In other words, a direction of the target torque is opposite to a direction of a torque formed by the hand torque applied by the driver to the steering wheel. The first direction may be a left side of the vehicle, or may be a right side of the vehicle.

For example, the target torque may be determined based on the hand torque applied by the driver to the steering wheel and a relationship between the collision risk 2 and a preset threshold. Alternatively, the target torque may be determined based on the hand torque applied by the driver to the steering wheel and a level of a collision risk between the vehicle and an obstacle 1. The obstacle 1 may be an obstacle that has a highest probability of colliding with the vehicle in the at least one obstacle in the first direction.

For example, when the collision risk level is less than or equal to a preset level threshold 1, an electric power steering (electric power steering, EPS) assist characteristic curve is queried based on the hand torque applied by the driver to the steering wheel and the current velocity of the vehicle, a counter torque is preliminarily determined based on the EPS assist characteristic curve, and slope limiting and filtering are performed on the counter torque to obtain the target torque. Slope limiting means that a torque output change rate is limited based on torque change slope control. A value of the target torque minus a value of the torque formed by the hand torque applied by the driver to the steering wheel is greater than or equal to a preset threshold 1 and less than or equal to a preset threshold 2, so that the driver can feel impedance in a process of continuing to turn the steering wheel in the first direction, to notify the driver that the vehicle has the collision risk, and enable the driver to have sufficient time to control the vehicle to avoid a collision. For example, the preset threshold 1 may be -0.5 N·m, the preset threshold 2 may be 0 N·m, or the preset threshold 1 and the preset threshold 2 may be other values.

For example, when the collision risk level is greater than a preset level threshold 1, an EPS assistance characteristic curve is queried based on the torque applied by the driver to the steering wheel and the current velocity of the vehicle, to determine a preliminary target torque. A value of the preliminary target torque may be the same as a value of the torque formed by the hand torque applied by the driver to the steering wheel. Further, an additional torque is determined based on the velocity of the vehicle, and a lateral distance and a longitudinal distance between the vehicle and the obstacle. The additional torque is used to correct a lateral location of the vehicle, so that the vehicle does not collide with the obstacle. A value obtained by superposing the additional torque and the preliminary target torque is the target torque. The value of the target torque minus the value of the torque formed by the hand torque applied by the driver to the steering wheel is greater than the preset threshold 2, to control the vehicle to turn in a direction opposite to the first direction, to avoid a collision with the obstacle in the first direction.

For example, the preset level threshold 1 may be level 1 or level 2.

In some possible implementations, when the collision risk level is less than or equal to the preset level threshold 1, in addition to controlling the steering wheel by using the target torque to notify the driver of the collision risk, the driver may be notified of the collision risk via an HMI, a speaker, or the like. For example, "Pay attention to the obstacle in the first direction" is broadcast via the speaker to notify the driver.

S407: Determine a longitudinal acceleration based on the collision risk and the driving comfort or the longitudinal distance, and control, based on the longitudinal acceleration, the vehicle to decelerate.

For example, the longitudinal acceleration may be determined based on the relationship between the collision risk 2 and the preset threshold and the driving comfort or the longitudinal distance between the vehicle and the front nearest obstacle. Alternatively, the longitudinal acceleration may be determined based on a level of the collision risk between the vehicle and the front nearest obstacle and the driving comfort or the longitudinal distance between the vehicle and the front nearest obstacle.

For example, when the collision risk level is less than or equal to a preset level threshold 2, a longitudinal acceleration 1 is determined based on the driving comfort, so that the vehicle is slowly decelerated before entering a state with a high collision risk. This improves driving safety and improves comfort of the driver and a passenger. When collision risk levels are different, the vehicle may be decelerated by using different longitudinal accelerations while driving comfort is ensured. For example, when the collision risk level is less than or equal to the preset level threshold 2, when the collision risk level is low, the vehicle is decelerated by using a small longitudinal acceleration; or when the collision risk level is high, the vehicle is decelerated by using a large longitudinal acceleration.

For example, when the collision risk level is greater than or equal to the preset level threshold 2, a longitudinal acceleration 2 is determined based on the velocity of the vehicle and the longitudinal distance between the vehicle and the front nearest obstacle.

For example, an absolute value of the longitudinal acceleration 1 may be less than or equal to 4 m/s$^2$, and an absolute value of the longitudinal acceleration 2 may be greater than 4 m/s$^2$.

For example, the preset level threshold 2 may be level 1 or level 2.

During specific implementation, not all operations in FIG. 4 need to be performed. For example, S406 or S407 may be performed. For example, when there is no lateral collision risk, only S407 may be performed; or when there is no longitudinal collision risk, only S406 may be performed. In addition, the operations shown in FIG. 4 may not be performed in a sequence shown in the figure. For example, S406 and S407 may be performed simultaneously, or S407 may be performed before S406.

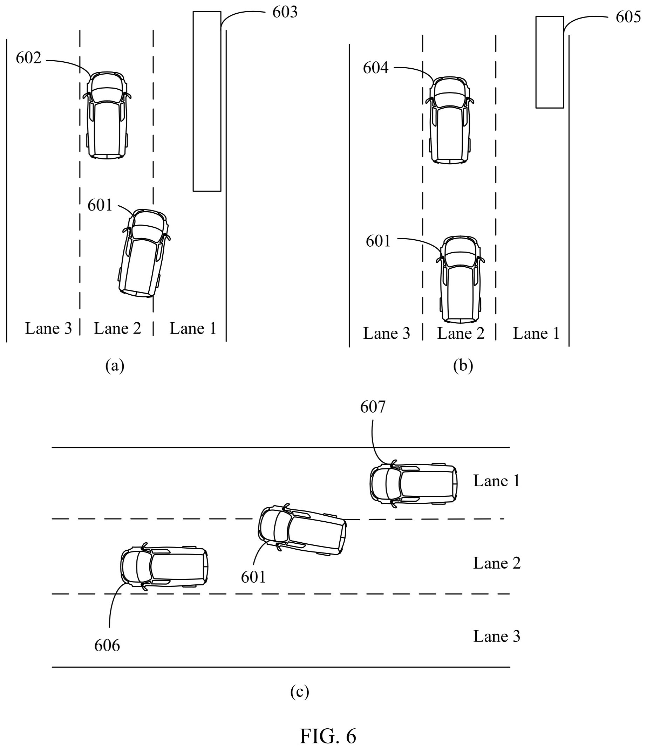

FIG. 6 shows an application scenario according to an embodiment of this application. As shown in (a) in FIG. 6, in a process in which a vehicle 601 is in a manual driving mode and travels in a lane 2, when a driver applies a torque to a steering wheel, and the vehicle 601 deviates from a center line of the lane line to a right side, the vehicle 601 may collide with an obstacle 603. In this case, the steering wheel of the vehicle 601 may be controlled according to the foregoing method 400, to avoid a collision. As shown in (b) in FIG. 6, in a process in which the vehicle 601 is in the manual driving mode and travels in the lane 2, there is a collision risk between the vehicle 601 and a front vehicle 604 because the front vehicle 604 suddenly decelerates. If the vehicle 601 decelerates at a maximum deceleration and cannot avoid a collision, a target torque may be determined based on the torque applied by the driver to the steering wheel, so that the vehicle 601 travels on the right side, to avoid the collision between the vehicle 601 and the front vehicle 604. In addition, in a process of determining the target torque, a velocity and a location of an obstacle 605 are considered, to avoid a collision between the vehicle 601 and the obstacle 605 in an obstacle avoidance process. As shown in (c) in FIG. 6, in a process in which the vehicle 601 is in the manual driving mode and travels in the lane 2, the driver applies a torque to the steering wheel, so that the vehicle 601 deviates from the center line of the lane line and travels on the right side. In this case, the vehicle 601 may collide with a vehicle 607 on a right rear side. Therefore, a collision risk level may be determined based on a location and a velocity of the vehicle 601 and a location and a velocity of the vehicle 607, and a target torque may be determined based on the collision risk level and the torque applied by the driver to the steering wheel. Further, the steering wheel of the vehicle 601 may be controlled based on the target torque, to avoid the collision. Alternatively, when the vehicle 601 is in a pose shown in (c) in FIG. 6, the driver applies a torque to the steering wheel, so that the vehicle 601 deviates from a current pose and travels on a left side relative to the center line of the lane line. In this case, the vehicle 601 may collide with a front vehicle 606. Therefore, a collision risk level may be determined based on a location and a velocity of the vehicle 601 and a location and a velocity of the vehicle 606, and a target torque may be determined based on the collision risk level and the torque applied by the driver to the steering wheel. Further, the steering wheel of the vehicle 601 may be controlled based on the target torque. In addition, a longitudinal acceleration may be determined based on the collision risk level, and based on the longitudinal acceleration, the vehicle 601 may be controlled to decelerate, to avoid the collision.

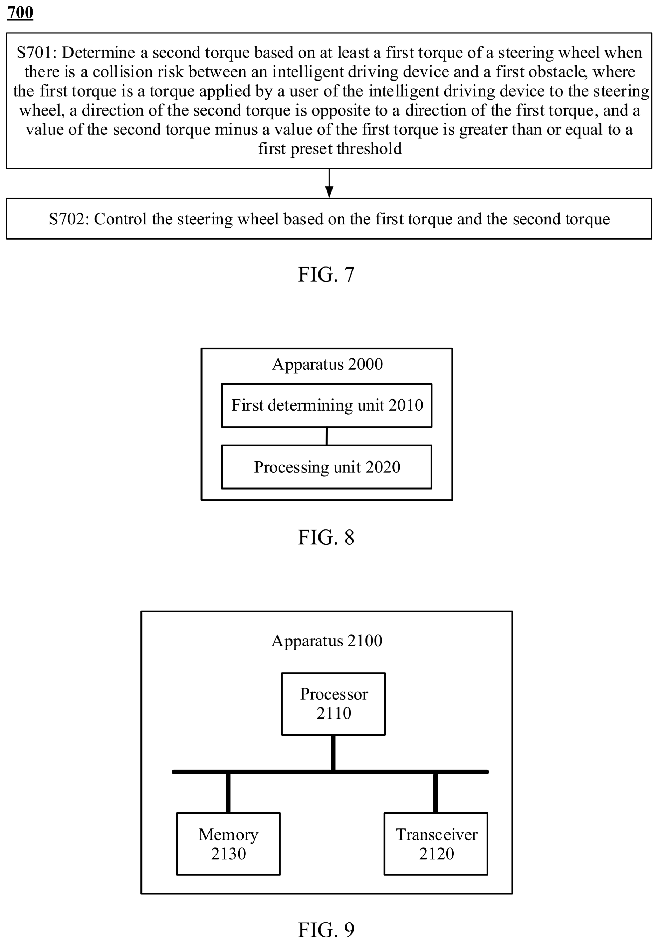

FIG. 7 shows a control method according to an embodiment of this application. The method may be applied to the intelligent driving device shown in FIG. 2, or the method may be performed by the system shown in FIG. 3. The method includes the following steps.

S701: Determine a second torque based on at least a first torque of a steering wheel when there is a collision risk between an intelligent driving device and a first obstacle, where the first torque is a torque applied by a user of the intelligent driving device to the steering wheel, a direction of the second torque is opposite to a direction of the first torque, and a value of the second torque minus a value of the first torque is greater than or equal to a first preset threshold.

For example, the intelligent driving device may be the intelligent driving device 100, for example, may include the vehicle.

For example, the first obstacle may include a nearest obstacle in front of the intelligent driving device, or may include an obstacle on a first side of the intelligent driving device, for example, an obstacle 1. The first side is a side to which the intelligent driving device deviates under action of the first torque. For example, the first side is the right side of the vehicle 601 shown in (a) in FIG. 6.

For example, for a method for determining whether there is a collision risk between the intelligent driving device and the first obstacle, refer to descriptions in S401 and S402. Details are not described herein again.

Optionally, determining the second torque based on at least the first torque of the steering wheel includes: determining the second torque based on a relationship between a first threshold and a first collision risk between the intelligent driving device and the first obstacle. For example, a value of the second torque is determined based on a value of the first torque. When the first collision risk between the intelligent driving device and the first obstacle is less than or equal to the first threshold, the value of the second torque minus the value of the first torque is greater than or equal to the first preset threshold and less than a second preset threshold. Alternatively, when the first collision risk is greater than the first threshold, the value of the second torque minus the value of the first torque is greater than or equal to the second preset threshold.

For example, the first collision risk may include the collision risk 2, or the first collision risk may include a collision risk between the intelligent driving device and a lateral obstacle. For a method for determining the first collision risk, refer to the description in S405. Details are not described herein again.

S702: Control the steering wheel based on the first torque and the second torque.

Optionally, the method further includes: when a second collision risk between the intelligent driving device and the first obstacle is less than or equal to a second threshold, determining a first longitudinal acceleration based on driving comfort, and controlling, based on the first longitudinal acceleration, the intelligent driving device to decelerate; or when the second collision risk is greater than the second threshold, determining a second longitudinal acceleration based on at least a distance between the intelligent driving device and the first obstacle, and controlling, based on the second longitudinal acceleration, the intelligent driving device to decelerate, where an absolute value of the second longitudinal acceleration is greater than an absolute value of the first longitudinal acceleration.

For example, the second collision risk may include the collision risk 2, or the second collision risk may include a collision risk between the intelligent driving device and a front nearest obstacle. For a method for determining the second collision risk, refer to the description in S405. Details are not described herein again.

For example, the first collision risk and the second collision risk are determined based on a first motion trajectory, and the first motion trajectory may include the obstacle avoidance trajectory in the foregoing embodiment. For a specific method for determining the first motion trajectory, refer to the descriptions in the foregoing embodiment. Details are not described herein again.

According to the control method provided in this embodiment of this application, when the intelligent driving device detects a collision risk in a manual driving mode, the intelligent driving device may apply a counterforce to the steering wheel based on the torque applied by the driver to the steering wheel, to remind the driver of the collision risk. In addition, the steering wheel is controlled based on an action intent of the driver. This can make behavior of the intelligent driving device more human-like in an obstacle avoidance process, and also can large lateral acceleration caused by an excessive torque applied when a function is triggered, to improve driving experience of a driver and riding experience of a passenger. In addition, through joint control in a horizontal direction and a vertical direction, a probability of a collision is reduced and driving safety is improved in a complex driving scenario.

With reference to FIG. 1 to FIG. 7, the foregoing describes in detail the methods provided in embodiments of this application. The following describes in detail an apparatus provided in embodiments of this application with reference to FIG. 8 and FIG. 9. It should be understood that descriptions of the apparatus embodiments correspond to the descriptions of the method embodiments. Therefore, for content that is not described in detail, refer to the foregoing method embodiments. For brevity, details are not described herein again.

FIG. 8 is a block diagram of a control apparatus 2000 according to an embodiment of this application. The apparatus 2000 includes a first determining unit 2010 and a processing unit 2020.

The apparatus 2000 may include a unit configured to perform the method in FIG. 4 or FIG. 7. In addition, the units in the apparatus 2000 are respectively configured to implement corresponding procedures in the method embodiments in FIG. 4 or FIG. 7.

For example, when the apparatus 2000 is configured to perform the method 700, the first determining unit 2010 is configured to determine a second torque based on at least a first torque of a steering wheel when there is a collision risk between an intelligent driving device and a first obstacle, where the first torque is a torque applied by a user of the intelligent driving device to the steering wheel, a direction of the second torque is opposite to a direction of the first torque, and a value of the second torque minus a value of the first torque is greater than or equal to a first preset threshold; and a processing unit 2020 is configured to control the steering wheel based on the first torque and the second torque.

Optionally, the first determining unit 2010 is configured to: determine the value of the second torque based on the value of the first torque and a first collision risk between the intelligent driving device and the first obstacle, where when the first collision risk is less than or equal to a first threshold, the value of the second torque minus the value of the first torque is greater than or equal to the first preset threshold and is less than a second preset threshold; or when the first collision risk is greater than the first threshold, the value of the second torque minus the value of the first torque is greater than or equal to the second preset threshold.

Optionally, the first determining unit 2010 is further configured to: when a second collision risk between the intelligent driving device and the first obstacle is less than or equal to a second threshold, determine a first longitudinal acceleration based on driving comfort, and control, based on the first longitudinal acceleration, the intelligent driving device to decelerate; or when the second collision risk is greater than the second threshold, determine a second longitudinal acceleration based on at least a distance between the intelligent driving device and the first obstacle, and control, based on the second longitudinal acceleration, the intelligent driving device to decelerate, where an absolute value of the second longitudinal acceleration is greater than an absolute value of the first longitudinal acceleration.

Optionally, the apparatus 2000 further includes a second determining unit. The second determining unit is configured to: when a third collision risk between the intelligent driving device and the first obstacle is greater than or equal to a third threshold, determine a first motion trajectory based on control information entered by the user of the intelligent driving device and an obstacle boundary, where the control information includes at least one of the following: opening information of an accelerator pedal of the intelligent driving device, opening information of a brake pedal of the intelligent driving device, and the first torque, and the obstacle boundary is determined based on a plurality of obstacles including the first obstacle. The first determining unit 2010 is configured to: determine the second torque based on the first motion trajectory and the first torque, so that the intelligent driving device travels along the first motion trajectory when the steering wheel is controlled based on the second torque.

For example, the third collision risk may include the collision risk 1.

Optionally, the apparatus further includes a third determining unit. The third determining unit is configured to: determine a plurality of motion trajectories based on a driver reaction time and a control parameter reachable set, where the control parameter reachable set is a set of motion parameters that can be implemented by the intelligent driving device under control of the user; and determine the third collision risk based on the plurality of motion trajectories and a location and a velocity of the first obstacle.

For example, the plurality of motion trajectories may include the plurality of predicted trajectories. For a method for determining the plurality of motion trajectories, refer to the description in S401. Details are not described herein again.

Optionally, the first obstacle includes at least one of the following: a motor vehicle, a non-motor vehicle, a general obstacle, and a pedestrian.

For example, the first determining unit 2010 and the processing unit 2020 may be disposed in the intelligent driving device. More specifically, the first determining unit 2010 and the processing unit 2020 may be disposed in the interaction module 240 shown in FIG. 3. For example, the second determining unit may be disposed in the lateral and longitudinal planning module 230 shown in FIG. 3, and the third determining unit may be disposed in the activation decision-making module 220 shown in FIG. 3.

For example, operations performed by the first determining unit 2010 and the processing unit 2020 may be performed by one processor, or may be performed by different processors. During specific implementation, the one or more processors may be processors disposed in the intelligent driving device 100 shown in FIG. 2. Alternatively, the apparatus 2000 may be a chip disposed in the intelligent driving device 100.

In addition, all or some of the units in the foregoing apparatus may be integrated, or may be implemented independently. In an implementation, these units are integrated together and implemented in a form of a system-on-a-chip (system-on-a-chip, SoC).

FIG. 9 is a block diagram of a control apparatus according to an embodiment of this application. The apparatus 2100 shown in FIG. 9 may include a processor 2110, a transceiver 2120, and a memory 2130. The processor 2110, the transceiver 2120, and the memory 2130 are connected through an internal connection path. The memory 2130 is configured to store instructions. The processor 2110 is configured to execute the instructions stored in the memory 2130, to implement the methods in the foregoing embodiments. Optionally, the memory 2130 may be coupled to the processor 2110 through an interface, or may be integrated with the processor 2110.

It should be noted that the transceiver 2120 may include but is not limited to a transceiver apparatus of an input/output interface (input/output interface) type, to implement communication between the apparatus 2100 and another device or a communication network.

The memory 2130 may be a read-only memory (read-only memory, ROM), a static storage device, a dynamic storage device, or a random access memory (random access memory, RAM).

The transceiver 2120 uses, for example, but is not limited to, a transceiver apparatus of a transceiver type, to implement communication between the apparatus 2100 and another device or a communication network, to receive/send data/information used to implement the methods in the foregoing embodiments.

During specific implementation, the apparatus 2100 may be disposed in the computing platform 150 of the intelligent driving device 100 shown in FIG. 2.

An embodiment of this application further provides an intelligent driving device. The intelligent driving device includes the apparatus 2000 or the apparatus 2100.

In some possible implementations, the intelligent driving device may be a vehicle.

An embodiment of this application further provides a computer program product. The computer program product includes computer program code. When the computer program code is run on a computer, the computer is enabled to implement the methods in the foregoing embodiments of this application.

An embodiment of this application further provides a computer-readable storage medium. The computer-readable medium stores computer instructions. When the computer instructions are run on a computer, the computer is enabled to implement the methods in the foregoing embodiments of this application.

An embodiment of this application further provides a chip, including a circuit, configured to perform the methods in the foregoing embodiments of this application.

In an implementation process, the steps of the foregoing methods may be completed through a hardware integrated logic circuit in the processor or by using instructions in a form of software. The methods disclosed with reference to embodiments of this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in a memory. The processor reads information in the memory, and completes the steps of the foregoing methods in combination with the hardware in the processor. To avoid repetition, details are not described herein again.

It may be clearly understood by a person skilled in the art that, for the purpose of convenient and brief descriptions, for a detailed working process of the foregoing system, apparatus, and unit, reference may be made to a corresponding process in the foregoing method embodiments. Details are not described herein again.

In descriptions of embodiments of this application, "/" means "or" unless otherwise specified. For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In embodiments of this application, prefix words such as "first" and "second" are used only to distinguish different described objects, and do not limit locations, a sequence, priorities, quantities, content, or the like of the described objects. In embodiments of this application, use of the prefix words used to distinguish between the described objects, for example, ordinal numbers, constitutes no limitation on the described objects. For descriptions of the described object, refer to context descriptions in claims or embodiments. Use of the prefix words should constitute no redundant limitation.

In the several embodiments provided in this application, it should be understood that the disclosed system, apparatuses, and methods may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

In embodiments of this application, unless otherwise specified or there is a logic conflict, terms and/or descriptions between embodiments are consistent and may be mutually referenced, and technical features in different embodiments may be combined based on an internal logical relationship thereof, to form a new embodiment.

The units described as separate parts may or may not be physically separate, and parts displayed as units may or may not be physical units, to be specific, may be located in one location, or may be distributed on a plurality of network units. Some or all of the units may be selected based on an actual requirement, to achieve the objectives of the solutions in embodiments.

In addition, functional units in embodiments of this application may be integrated into one processing unit, or each of the units may exist alone physically, or two or more units are integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A control method, comprising:

   determining a second torque based on at least a first torque of a steering wheel when there is a collision risk between an intelligent driving device and a first obstacle, wherein
   the first torque is a torque applied by a user of the intelligent driving device to the steering wheel, a direction of the second torque is opposite to a direction of the first torque, and a value of the second torque minus a value of the first torque is greater than or equal to a first preset threshold; and
   controlling the steering wheel based on the first torque and the second torque.

2. The method according to claim 1, wherein determining the second torque based on at least the first torque of the steering wheel comprises:

   determining the value of the second torque based on the value of the first torque and a first collision risk between the intelligent driving device and the first obstacle, wherein
   when the first collision risk is less than or equal to a first threshold, the value of the second torque minus the value of the first torque is greater than or equal to the first preset threshold and is less than a second preset threshold; or
   when the first collision risk is greater than the first threshold, the value of the second torque minus the value of the first torque is greater than or equal to the second preset threshold.

3. The method according to claim 1 or 2, wherein the method further comprises:

   when a second collision risk between the intelligent driving device and the first obstacle is less than or equal to a second threshold, determining a first longitudinal acceleration based on driving comfort, and controlling, based on the first longitudinal acceleration, the intelligent driving device to decelerate; or
   when the second collision risk is greater than the second threshold, determining a second longitudinal acceleration based on at least a distance between the intelligent driving device and the first obstacle, and controlling, based on the second longitudinal acceleration, the intelligent driving device to decelerate, wherein
   an absolute value of the second longitudinal acceleration is greater than an absolute value of the first longitudinal acceleration.

4. The method according to any one of claims 1 to 3, wherein the method further comprises:

   when a third collision risk between the intelligent driving device and the first obstacle is greater than or equal to a third threshold, determining a first motion trajectory based on control information entered by the user of the intelligent driving device and an obstacle boundary, wherein the control information comprises at least one of the following: opening information of an accelerator pedal of the intelligent driving device, opening information of a brake pedal of the intelligent driving device, and the first torque, and the obstacle boundary is determined based on a plurality of obstacles comprising the first obstacle; and
   determining the second torque based on at least the first torque of the steering wheel comprises:

determining the second torque based on the first motion trajectory and the first torque, so that the intelligent driving device travels along the first motion trajectory when the steering wheel is controlled based on the second torque.

5. The method according to claim 4, wherein the method further comprises:

determining a plurality of motion trajectories based on a driver reaction time and a control parameter reachable set, wherein the control parameter reachable set is a set of motion parameters that can be implemented by the intelligent driving device under control of the user; and
determining the third collision risk based on the plurality of motion trajectories and a location and a velocity of the first obstacle.

6. The method according to any one of claims 1 to 5, wherein the first obstacle comprises at least one of the following: a motor vehicle, a non-motor vehicle, a general obstacle, and a pedestrian.

7. A control apparatus, comprising:

a first determining unit, configured to determine a second torque based on at least a first torque of a steering wheel when there is a collision risk between an intelligent driving device and a first obstacle, wherein
the first torque is a torque applied by a user of the intelligent driving device to the steering wheel, a direction of the second torque is opposite to a direction of the first torque, and a value of the second torque minus a value of the first torque is greater than or equal to a first preset threshold; and
a processing unit, configured to control the steering wheel based on the first torque and the second torque.

8. The apparatus according to claim 7, wherein the first determining unit is configured to:

determine the value of the second torque based on the value of the first torque and a first collision risk between the intelligent driving device and the first obstacle, wherein
when the first collision risk is less than or equal to a first threshold, the value of the second torque minus the value of the first torque is greater than or equal to the first preset threshold and is less than a second preset threshold; or
when the first collision risk is greater than the first threshold, the value of the second torque minus the value of the first torque is greater than or equal to the second preset threshold.

9. The apparatus according to claim 7 or 8, wherein the first determining unit is further configured to:

when a second collision risk between the intelligent driving device and the first obstacle is less than or equal to a second threshold, determine a first longitudinal acceleration based on driving comfort, and control, based on the first longitudinal acceleration, the intelligent driving device to decelerate; or
when the second collision risk is greater than the second threshold, determine a second longitudinal acceleration based on at least a distance between the intelligent driving device and the first obstacle, and control, based on the second longitudinal acceleration, the intelligent driving device to decelerate, wherein
an absolute value of the second longitudinal acceleration is greater than an absolute value of the first longitudinal acceleration.

10. The apparatus according to any one of claims 7 to 9, wherein the apparatus further comprises a second determining unit, and the second determining unit is configured to:

when a third collision risk between the intelligent driving device and the first obstacle is greater than or equal to a third threshold, determine a first motion trajectory based on control information entered by the user of the intelligent driving device and an obstacle boundary, wherein the control information comprises at least one of the following: opening information of an accelerator pedal of the intelligent driving device, opening information of a brake pedal of the intelligent driving device, and the first torque, and the obstacle boundary is determined based on a plurality of obstacles comprising the first obstacle; and
the first determining unit is configured to:
determine the second torque based on the first motion trajectory and the first torque, so that the intelligent driving device travels along the first motion trajectory when the steering wheel is controlled based on the second torque.

11. The apparatus according to claim 10, wherein the apparatus further comprises a third determining unit, and the third determining unit is configured to:

determine a plurality of motion trajectories based on a driver reaction time and a control parameter reachable set, wherein the control parameter reachable set is a set of motion parameters that can be implemented by the intelligent driving device under control of the user; and

determine the third collision risk based on the plurality of motion trajectories and a location and a velocity of the first obstacle.

12. The apparatus according to any one of claims 7 to 11, wherein the first obstacle comprises at least one of the following: a motor vehicle, a non-motor vehicle, a general obstacle, and a pedestrian.

13. A control apparatus, comprising:

a memory, configured to store a computer program; and

a processor, configured to execute the computer program stored in the memory, so that the apparatus performs the method according to any one of claims 1 to 6.

14. An intelligent driving device, comprising the apparatus according to any one of claims 7 to 13.

15. A computer-readable storage medium, wherein the computer-readable storage medium stores instructions, and when the instructions are executed by a processor, the processor is enabled to implement the method according to any one of claims 1 to 6.

16. A chip, wherein the chip comprises a circuit, and the circuit is configured to perform the method according to any one of claims 1 to 6.

Obstacle

Another
vehicle

Obstacle
avoidance path

Ego
vehicle

FIG. 1

Intelligent driving device 100

Sensing system
120

Interaction
system 130

Computing platform 150

| Processor 151 | Processor 152 | ... | Processor 15n |

FIG. 2

FIG. 3

400

S401: When at least one obstacle is detected within a preset range of a vehicle, generate a plurality of predicted trajectory lines based on control information entered by a driver and a control parameter reachable set

S402: Evaluate a collision risk 1 based on the plurality of predicted trajectory lines and information such as a location and a velocity of the at least one obstacle

S403: When the collision risk 1 is greater than or equal to a trigger threshold, generate a lateral reference line based on state space sampling, and generate a plurality of planned trajectories based on an obstacle boundary formed by the at least one obstacle

S404: Determine an obstacle avoidance trajectory from the plurality of planned trajectories based on the control information entered by the driver

S405: Determine a collision risk 2 based on the obstacle avoidance trajectory

S406: Determine a target torque based on the collision risk and a hand torque applied by the driver to a steering wheel, and control the steering wheel based on the target torque

S407: Determine a longitudinal acceleration based on the collision risk and driving comfort or a longitudinal distance, and control, based on the longitudinal acceleration, the vehicle to decelerate

FIG. 4

FIG. 5

603

602

601

Lane 3 | Lane 2 | Lane 1

(a)

605

604

601

Lane 3 | Lane 2 | Lane 1

(b)

607

Lane 1

601

Lane 2

606

Lane 3

(c)

FIG. 6

**700**

S701: Determine a second torque based on at least a first torque of a steering wheel when there is a collision risk between an intelligent driving device and a first obstacle, where the first torque is a torque applied by a user of the intelligent driving device to the steering wheel, a direction of the second torque is opposite to a direction of the first torque, and a value of the second torque minus a value of the first torque is greater than or equal to a first preset threshold

S702: Control the steering wheel based on the first torque and the second torque

FIG. 7

Apparatus 2000

First determining unit 2010

Processing unit 2020

FIG. 8

Apparatus 2100

Processor 2110

Memory 2130

Transceiver 2120

FIG. 9

## INTERNATIONAL SEARCH REPORT

International application No.

**PCT/CN2024/077756**

| A. | CLASSIFICATION OF SUBJECT MATTER |
|---|---|

B60W30/09(2012.01)i; B62D6/00(2006.01)i; B62D119/00(2006.01)i

According to International Patent Classification (IPC) or to both national classification and IPC

| B. | FIELDS SEARCHED |
|---|---|

Minimum documentation searched (classification system followed by classification symbols)

B60W,B62D

Documentation searched other than minimum documentation to the extent that such documents are included in the fields searched

Electronic data base consulted during the international search (name of data base and, where practicable, search terms used)

CNTXT, ENTXTC, WPABSC, VEN, CJFD: 方向盘, 反向, 逆向, 转矩, 障碍物, 碰撞, 避障, 提示, 提醒, steering, torque, assist, obstacle, collision, avoidance

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 114620127 A (CHINA FAW CO., LTD.) 14 June 2022 (2022-06-14) description, paragraphs 30-129, and figures 1-6 | 1-3, 6-9, 12-16 |
| Y | CN 115402305 A (CHINA FAW CO., LTD.) 29 November 2022 (2022-11-29) description, paragraphs 30-142, and figures 1-7 | 1-3, 6-9, 12-16 |
| X | CN 115214646 A (ZHEJIANG ECDAG AUTOMOTIVE TECHNOLOGY CO., LTD.) 21 October 2022 (2022-10-21) description, paragraphs 41-51, and figures 1-2 | 1-3, 6-9, 12-16 |
| A | CN 112109731 A (BEIJING BAIDU NETCOM SCIENCE & TECHNOLOGY CO., LTD.) 22 December 2020 (2020-12-22) entire document | 1-16 |
| A | KR 20120137025 A (HYUNDAI MOBIS CO., LTD.) 20 December 2012 (2012-12-20) entire document | 1-16 |
| A | US 2008255729 A1 (HITACHI, LTD.) 16 October 2008 (2008-10-16) entire document | 1-16 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 May 2024** | **19 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/077756**

| Patent document cited in search report | | | Publication date (day/month/year) | Patent family member(s) | | | Publication date (day/month/year) |
|---|---|---|---|---|---|---|---|
| CN | 114620127 | A | 14 June 2022 | None | | | |
| CN | 115402305 | A | 29 November 2022 | None | | | |
| CN | 115214646 | A | 21 October 2022 | None | | | |
| CN | 112109731 | A | 22 December 2020 | None | | | |
| KR | 20120137025 | A | 20 December 2012 | None | | | |
| US | 2008255729 | A1 | 16 October 2008 | EP | 1982898 | A2 | 22 October 2008 |
| | | | | DE | 602008005804 | D1 | 12 May 2011 |
| | | | | JP | 2008265362 | A | 06 November 2008 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310713675X